# EUROPÄISCHE PATENTSCHRIFT

(11) **EP 2 812 605 B1**
(45) Veröffentlichungstag und Bekanntmachung des Hinweises auf die Patenterteilung: **30.03.2016**
(21) Anmeldenummer: 13700645.8
(22) Anmeldetag: 10.01.2013
(51) Int. Cl.: F16H 3/66, F16H 3/72, F16H 37/04, B60K 6/365, B60K 6/48

(54) **MEHRSTUFENGETRIEBE**
MULTI-RATIO TRANSMISSION
BOÎTE DE VITESSES MULTI-ÉTAGÉE

(30) Priorität: 06.02.2012 DE 102012201687
(43) Veröffentlichungstag der Anmeldung: 17.12.2014
(73) Patentinhaber: ZF Friedrichshafen AG, 88046 Friedrichshafen (DE)
(72) Erfinder: BECK, Stefan, 88097 Eriskirch (DE); WEHLEN, Timo, 88045 Friedrichshafen (DE)
(86) Internationale Anmeldenummer: PCT/EP2013/050338
(87) Internationale Veröffentlichungsnummer: WO 2013/117364

(56) Entgegenhaltungen:
- DE-A1-102009 018 958
- JP-A- 2009 270 667
- US-A1- 2008 090 697
- US-A1- 2009 305 837
- US-A1- 2010 035 718

## Beschreibung

Die vorliegende Erfindung betrifft ein Mehrstufengetriebe, insbesondere ein Automatgetriebe für ein Kraftfahrzeug, gemäß dem Oberbegriff des Patentanspruchs 1.

Automatgetriebe, insbesondere für Kraftfahrzeuge, umfassen nach dem Stand der Technik Planetenradsätze, die mittels Reibungs- bzw. Schaltelementen, wie etwa Kupplungen und Bremsen, geschaltet werden und üblicherweise mit einem einer Schlupfwirkung unterliegenden und wahlweise mit einer Überbrückungskupplung versehenen Anfahrelement, wie etwa einem hydrodynamischen Drehmomentwandler oder einer Strömungskupplung, verbunden sind.

Derartige Automatgetriebe sind im Stand der Technik vielfach beschrieben und unterliegen einer permanenten Weiterentwicklung und Verbesserung. So sollen diese Getriebe eine ausreichende Anzahl von Vorwärtsgängen sowie mindestens einen Rückwärtsgang und eine für Kraftfahrzeuge sehr gut geeignete Übersetzung mit einer hohen Gesamtspreizung sowie günstigen Stufensprüngen aufweisen. Ferner sollen diese eine hohe Anfahrübersetzung in Vorwärtsrichtung ermöglichen und einen Direktgang enthalten. Zudem sollen Automatgetriebe einen geringen Bauaufwand und eine geringe Anzahl an Schaltelementen erfordern, wobei bei sequentieller Schaltweise jeweils nur ein Schaltelement zugeschaltet und ein Schaltelement abgeschaltet werden soll.

Ein derartiges Automatgetriebe ist beispielsweise aus der DE 199 12 480 B4 der Anmelderin bekannt. Es umfasst drei Einsteg-Planetenradsätze sowie drei Bremsen und zwei Kupplungen zum Schalten von sechs Vorwärtsgängen und einem Rückwärtsgang, eine Antriebswelle und eine Abtriebswelle, wobei der Steg des ersten Planetenradsatzes mit dem Hohlrad des zweiten Planetenradsatzes und der Steg des zweiten Planetenradsatzes mit dem Hohlrad des dritten Planetenradsatzes ständig verbunden ist und die Antriebswelle direkt mit dem Sonnenrad des zweiten Planetenradsatzes verbunden ist.

Ferner ist bei dem bekannten Getriebe vorgesehen, dass die Antriebswelle über die erste Kupplung mit dem Sonnenrad des ersten Planetenradsatzes und über die zweite Kupplung mit dem Steg des ersten Planetensatzes verbindbar ist, wobei das Sonnenrad des ersten Planetenradsatzes über die erste Bremse mit einem Gehäuse des Getriebes verbindbar ist und der Steg des ersten Planetenradsatzes über die zweite Bremse mit dem Gehäuse des Getriebes verbindbar ist, wobei das Sonnenrad des dritten Planetenradsatzes über die dritte Bremse mit dem Gehäuse des Getriebes verbindbar ist. Die Abtriebswelle des Getriebes ist mit dem Steg des dritten Planetenradsatzes und dem Hohlrad des ersten Planetenradsatzes ständig verbunden.

Aus der JP 2009 270 667 ist ein Mehrstufengetriebe nach dem Oberbegriff des unabhängigen Anspruchs 1 bekannt.

Der vorliegenden Erfindung liegt die Aufgabe zugrunde, ein Mehrstufengetriebe anzugeben, welches axial betrachtet einen geringen Bauraumbedarf aufweist, so dass ein Einbau des Getriebes und optional eine Hybridisierung des Getriebes als Front-Quer-System ermöglicht wird. Zudem soll der Wirkungsgrad hinsichtlich der Schlepp- und Verzahnungsverluste verbessert werden.

Diese Aufgabe wird erfindungsgemäß durch die Merkmale des Patentanspruchs 1 gelöst. Weitere Vorteile und vorteilhafte Ausgestaltungen gehen aus den Unteransprüchen hervor.

Demnach wird ein Mehrstufengetriebe vorgeschlagen, welches einen Antrieb und einen Abtrieb aufweist, welche in einem Gehäuse angeordnet sind. Des Weiteren umfasst das Getriebe drei Planetenradsätze, im Folgenden als erster, zweiter und dritter Planetenradsatz bezeichnet, mindestens acht drehbare Wellen - im Folgenden als Antriebswelle, Abtriebswelle, dritte, vierte, fünfte, sechste, siebte und achte Welle bezeichnet -, eine erste und eine zweite Stirnradstufe in Verbindung mit einer parallel zur Längsachse der Planetenradsätze angeordneten Vorgelegewelle, die als Abtriebswelle des Getriebes dient, und fünf Schaltelemente, umfassend eine Bremse und Kupplungen, deren selektives Eingreifen verschiedene Übersetzungsverhältnisse zwischen der Antriebswelle und der Abtriebswelle bewirkt, so dass vorzugsweise acht Vorwärtsgänge und ein Rückwärtsgang realisierbar sind.

Die Planetenradsätze sind vorzugsweise als Minus-Planetenradsätze ausgebildet. Ein einfacher Minus-Planetenradsatz umfasst bekanntlich ein Sonnenrad, ein Hohlrad und einen Steg, an dem Planetenräder drehbar gelagert sind, die jeweils mit Sonnenrad und Hohlrad kämmen. Hierdurch weist das Hohlrad bei festgehaltenem Steg eine zum Sonnenrad entgegengesetzte Drehrichtung auf. Demgegenüber umfasst ein einfacher Plus-Planetenradsatz ein Sonnenrad, ein Hohlrad und einen Steg, an dem innere und äußere Planetenräder drehbar gelagert sind, wobei alle inneren Planetenräder mit dem Sonnenrad und alle äußeren Planetenräder mit dem Hohlrad kämmen, wobei jedes innere Planetenrad mit jeweils einem äußeren Planetenrad kämmt. Hierdurch weist das Hohlrad bei festgehaltenem Steg die gleiche Drehrichtung auf wie das Sonnenrad und es ergibt sich eine positive Standgetriebeübersetzung.

Des Weiteren sind vorzugsweise zwei der Planetenradsätze des Getriebes radial betrachtet übereinander angeordnet, was darin resultiert, dass eine sehr kurze Baulänge erzielt wird, wodurch das Getriebe in PKWs in Front-Quer-Bauweise eingebaut werden kann.

In vorteilhafter Weise ist der zweite Planetenradsatz radial betrachtet über dem ersten Planetenradsatz angeordnet, wobei die Planetenradsätze axial betrachtet in der Reihenfolge erster Planetenradsatz/zweiter Planetenradsatz, dritter Planetenradsatz angeordnet sind. Im Rahmen weiterer Ausführungsformen der Erfindung kann die axiale Reihenfolge der Planetenradsätze beliebig sein; zudem können die Planetenradsätze axial betrachtet hintereinander angeordnet sein.

Gemäß der Erfindung ist die Antriebswelle mit dem Steg des ersten Planetenradsatzes verbunden und über eine erste Kupplung mit der fünften Welle lösbar verbindbar, welche mit dem Hohlrad des zweiten Planetenradsatzes und dem Sonnenrad des dritten Planetenradsatzes verbunden ist, wobei das Hohlrad des ersten Planetenradsatzes mit der mit dem Sonnenrad des zweiten Planetenradsatzes verbundenen sechsten Welle verbunden ist.

Des Weiteren ist der Steg des zweiten Planetenradsatzes mit der vierten Welle verbunden, welche über die erste Stirnradstufe und eine zweite Kupplung mit der Abtriebswelle lösbar verbindbar ist. Hierbei kann die vierte Welle mit einem ersten Stirnrad der ersten Stirnradstufe verbunden sein, deren zweites Stirnrad über die zweite Kupplung mit der Abtriebswelle lösbar verbindbar ist. Alternativ dazu kann die vierte Welle über die zweite Kupplung mit dem ersten Stirnrad der ersten Stirnradstufe lösbar verbindbar sein, wobei das zweite Stirnrad der ersten Stirnradstufe mit der Abtriebswelle verbunden ist.

Anstatt oder zusätzlich zu der ersten Stirnradstufe kann die vierte Welle mittels einer Kette, einen Riemen oder einem oder mehreren sonstiges Bauteil mit der Abtriebswelle über zumindest eine Kupplung lösbar verbindbar sein.

Ferner ist der Steg des dritten Planetenradsatzes mit der siebten Welle verbunden, die über die zweite Stirnradstufe mit der Abtriebswelle verbunden ist, wobei die dritte Welle des Getriebes mit dem Sonnenrad des ersten Planetenradsatzes verbunden, über die Bremse an das Gehäuse des Getriebes ankoppelbar und über eine dritte Kupplung mit der mit dem Hohlrad des dritten Planetenradsatzes verbundenen achten Welle lösbar verbindbar ist.

Anstatt oder zusätzlich zu der zweiten Stirnradstufe kann die vierte Welle mittels einer Kette, einen Riemen oder einem oder mehreren sonstiges Bauteil mit der Abtriebswelle über zumindest eine Kupplung lösbar verbindbar sein.

Erfindungsgemäß ist eine weitere Kupplung vorgesehen, durch deren Schließen der zweite Planetensatz verblockbar ist.

Gemäß einer ersten Ausführungsform der Erfindung ist die weitere Kupplung als Kupplung ausgeführt, welche die sechste Welle mit der vierten Welle lösbar verbindet, so dass die Verblockung des zweiten Planetenradsatzes durch eine Koppelung des Sonnenrades des zweiten Planetenradsatzes mit dem Steg des zweiten Planetenradsatzes erfolgen kann.

Im Rahmen einer weiteren Ausführungsform der Erfindung kann die weitere Kupplung als Kupplung ausgeführt sein, welche die sechste Welle mit der fünften Welle lösbar verbindet, so dass die Verblockung des zweiten Planetenradsatzes durch eine Koppelung des Hohlrades des zweiten Planetenradsatzes mit dem Sonnenrad des zweiten Planetenradsatzes erfolgen kann.

Ferner kann die weitere Kupplung als Kupplung ausgeführt sein, welche die fünfte Welle mit der vierten Welle lösbar verbindet, so dass die Verblockung des zweiten Planetenradsatzes durch eine Koppelung des Stegs des zweiten Planetenradsatzes mit dem Hohlrad des zweiten Planetenradsatzes erfolgen kann.

Durch die erfindungsgemäße Ausgestaltung des Mehrstufengetriebes ergeben sich insbesondere für Personenkraftwagen geeignete Übersetzungen sowie eine erhöhte Gesamtspreizung des Mehrstufengetriebes, wodurch eine Verbesserung des Fahrkomforts und eine signifikante Verbrauchsabsenkung bewirkt werden.

Darüber hinaus wird mit dem erfindungsgemäßen Mehrstufengetriebe durch eine geringe Anzahl an Schaltelementen der Bauaufwand erheblich reduziert. In vorteilhafter Weise ist es mit dem erfindungsgemäßen Mehrstufengetriebe möglich, ein Anfahren mit einem hydrodynamischen Wandler, einer externen Anfahrkupplung oder auch mit sonstigen geeigneten externen Anfahrelementen durchzuführen. Es ist auch denkbar, einen Anfahrvorgang mit einem im Getriebe integrierten Anfahrelement zu ermöglichen. Vorzugsweise eignet sich ein Schaltelement, welches im ersten Vorwärtsgang und im Rückwärtsgang betätigt wird.

Des Weiteren ergibt sich bei dem erfindungsgemäßen Mehrstufengetriebe ein guter Wirkungsgrad in den Hauptfahrgängen bezüglich der Schlepp- und Verzahnungsverluste.

Ferner liegen geringe Drehmomente in den Schaltelementen und in den Planetenradsätzen des Mehrstufengetriebes vor, wodurch der Verschleiß in vorteilhafter Weise reduziert wird. Zudem wird durch die geringen Drehmomente eine entsprechend geringe Dimensionierung ermöglicht, wodurch der benötigte Bauraum und die entsprechenden Kosten reduziert werden. Darüber hinaus liegen auch geringe Drehzahlen bei den Wellen, den Schaltelementen und den Planetenradsätzen vor.

Außerdem ist das erfindungsgemäße Getriebe derart konzipiert, dass der Bauraumbedarf axial betrachtet gering ist, wodurch eine Hybridisierung des Getriebes als Front-Quer-System ermöglicht wird.

Die Erfindung wird im Folgenden anhand der beigefügten Figuren beispielhaft näher erläutert. In diesen stellen dar:
- Figur 1:: eine schematische Ansicht einer bevorzugten Ausführungsform eines erfindungsgemäßen Mehrstufengetriebes;
- Figur 2:: eine schematische Ansicht einer zweiten bevorzugten Ausführungsform eines erfindungsgemäßen Mehrstufengetriebes;
- Figur 3:: eine schematische Ansicht einer dritten bevorzugten Ausführungsform eines erfindungsgemäßen Mehrstufengetriebes;
- Figur 4:: eine schematische Ansicht einer vierten bevorzugten Ausführungsform eines erfindungsgemäßen Mehrstufengetriebes;
- Figur 5:: eine schematische Ansicht einer fünften bevorzugten Ausführungsform eines erfindungsgemäßen Mehrstufengetriebes;
- Figur 6:: eine schematische Ansicht einer sechsten bevorzugten Ausführungsform eines erfindungsgemäßen Mehrstufengetriebes; und
- Figur 7:: ein beispielhaftes Schaltschema für ein Mehrstufengetriebe gemäß Figuren 1 bis 6.

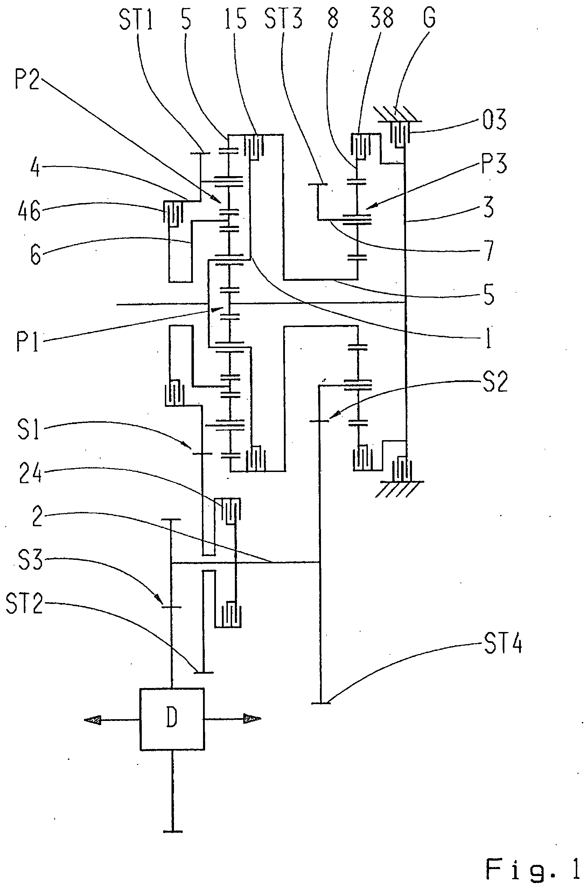

In Figur 1 ist ein erfindungsgemäßes Mehrstufengetriebe dargestellt, mit einem ersten Planetenradsatz P1, einem zweiten Planetenradsatz P2 und einem dritten Planetenradsatz P3, einer ersten Stirnradstufe S1 und einer zweiten Stirnradstufe S2 in Verbindung mit einer parallel zur Längsachse der koaxial zueinander angeordneten Planetenradsätze P1, P2, P3 angeordnete Vorgelegewelle, die als Abtriebswelle 2 des Getriebes dient, die in einem Gehäuse G angeordnet sind.

Bei dem gezeigten Beispiel ist der zweite Planetenradsatz P2 radial betrachtet über dem ersten Planetensatz P1 angeordnet, wodurch die Baulänge des Getriebes in vorteilhafter Weise reduziert wird. Die Planetenradsätze P1, P2, P3 sind axial betrachtet in der Reihenfolge erster Planetenradsatz P1/zweiter Planetenradsatz P2, dritter Planetenradsatz P3 angeordnet.

Hierbei kann zumindest ein Planetenradsatz des Getriebes als Plus-Planetenradsatz ausgeführt sein, wenn gleichzeitig die Steg- und Hohlradanbindung getauscht und der Betrag der Standgetriebeübersetzung im Vergleich zu der Ausführung als Minus-Planetenradsatz um 1 erhöht wird.

Wie aus Figur 1 ersichtlich, sind fünf Schaltelemente, nämlich eine Bremse 03 und vier Kupplungen 15, 24,38 und 46 vorgesehen. Die räumliche Anordnung der Schaltelemente kann beliebig sein und wird nur durch die Abmessungen und die äußere Formgebung begrenzt. Die Kupplungen und die Bremse des Getriebes sind vorzugsweise als Reibschaltelemente bzw. Lamellenschaltelemente ausgeführt.

Mit diesen Schaltelementen ist ein selektives Schalten von acht Vorwärtsgängen und einem Rückwärtsgang realisierbar. Das erfindungsgemäße Mehrstufengetriebe weist insgesamt mindestens acht drehbare Wellen auf, wobei die Antriebswelle die erste Welle 1 und die Abtriebswelle die zweite Welle 2 des Getriebes bilden.

Erfindungsgemäß ist bei dem Mehrstufengetriebe gemäß Figur 1 vorgesehen, dass die Antriebswelle 1 mit dem Steg des ersten Planetenradsatzes P1 verbunden und über eine erste Kupplung 15 mit der fünften Welle 5 lösbar verbindbar ist, welche mit dem Hohlrad des zweiten Planetenradsatzes P2 und dem Sonnenrad des dritten Planetenradsatzes P3 verbunden ist, wobei das Hohlrad des ersten Planetenradsatzes P1 mit der mit dem Sonnenrad des zweiten Planetenradsatzes P2 verbundenen sechsten Welle 6 verbunden ist. Die dritte Welle 3 des Getriebes ist mit dem Sonnenrad des ersten Planetenradsatzes P1 verbunden, über die Bremse 03 an das Gehäuse G des Getriebes ankoppelbar und über eine dritte Kupplung 38 mit der mit dem Hohlrad des dritten Planetenradsatzes P3 verbundenen achten Welle 8 lösbar verbindbar.

Bezugnehmend auf Figur 1 ist der Steg des zweiten Planetenradsatzes P2 mit der vierten Welle 4 verbunden, welche mit einem ersten Stirnrad ST1 der ersten Stirnradstufe S1 verbunden ist, deren zweites Stirnrad ST2 über eine zweite Kupplung 24 mit der Abtriebswelle 2 lösbar verbindbar ist, wobei der Steg des dritten Planetenradsatzes P3 mit siebten Welle 7 verbunden ist, die mit dem ersten Stirnrad ST3 der zweiten Stirnradstufe ST2 verbunden ist, wobei das zweite Stirnrad ST4 der zweiten Stirnradstufe S2 mit der Abtriebswelle 2 verbunden ist.

Des Weiteren ist bei dem erfindungsgemäßen Getriebe eine weitere Kupplung vorgesehen, durch deren Schließen der zweite Planetenradsatz P2 verblockbar ist. Bei dem in Figur 1 gezeigten Beispiel ist die weitere Kupplung als vierte Kupplung 46 ausgeführt, welche die sechste Welle 6 mit der vierten Welle 4 lösbar verbindet, so dass die Verblockung des zweiten Planetenradsatzes P2 durch eine Koppelung des Sonnenrades des zweiten Planetenradsatzes P2 mit dem Steg des zweiten Planetenradsatzes P2 erfolgen kann.

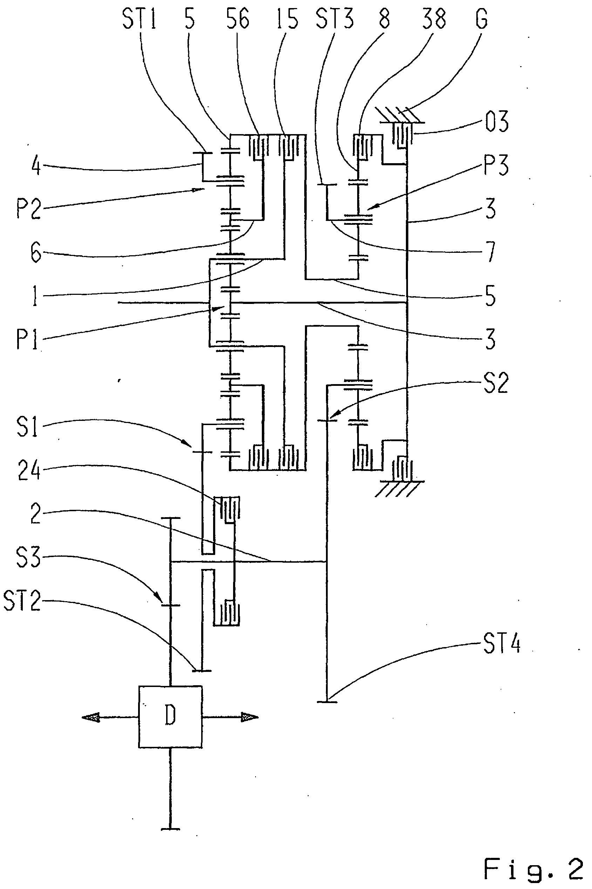

Im Rahmen einer weiteren Ausführungsform der Erfindung, die Gegenstand der Figur 2 ist, kann die weitere Kupplung als fünfte Kupplung 56 ausgeführt sein, welche die sechste Welle 6 mit der fünften Welle 5 lösbar verbindet, so dass die Verblockung des zweiten Planetenradsatzes durch eine Koppelung des Hohlrades des zweiten Planetenradsatzes P2 mit dem Sonnenrad des zweiten Planetenradsatzes P2 erfolgen kann. Hierbei können die erste und fünfte Kupplung 15, 56 axial betrachtet nebeneinander angeordnet sein und einen gemeinsamen Außenlamellenträger aufweisen.

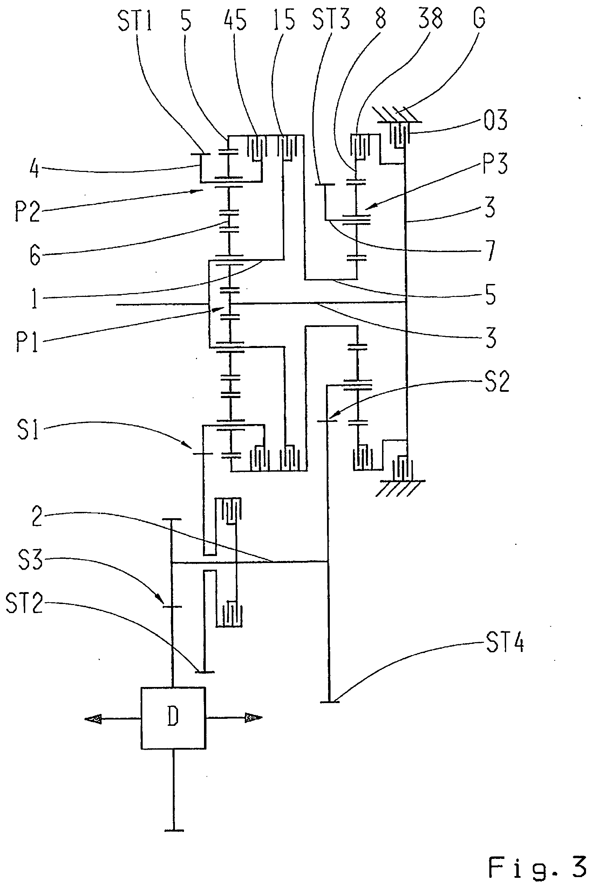

Bezugnehmend auf Figur 3 kann die weitere Kupplung als sechste Kupplung 45 ausgeführt sein, welche die fünfte Welle 5 mit der vierten Welle 4 lösbar verbindet, so dass die Verblockung des zweiten Planetenradsatzes durch eine Koppelung des Stegs des zweiten Planetenradsatzes P2 mit dem Hohlrad des zweiten Planetenradsatzes P2 erfolgen kann. Hierbei können die erste und sechste Kupplung 15, 45 axial betrachtet nebeneinander angeordnet sein und einen gemeinsamen Außenlamellenträger aufweisen.

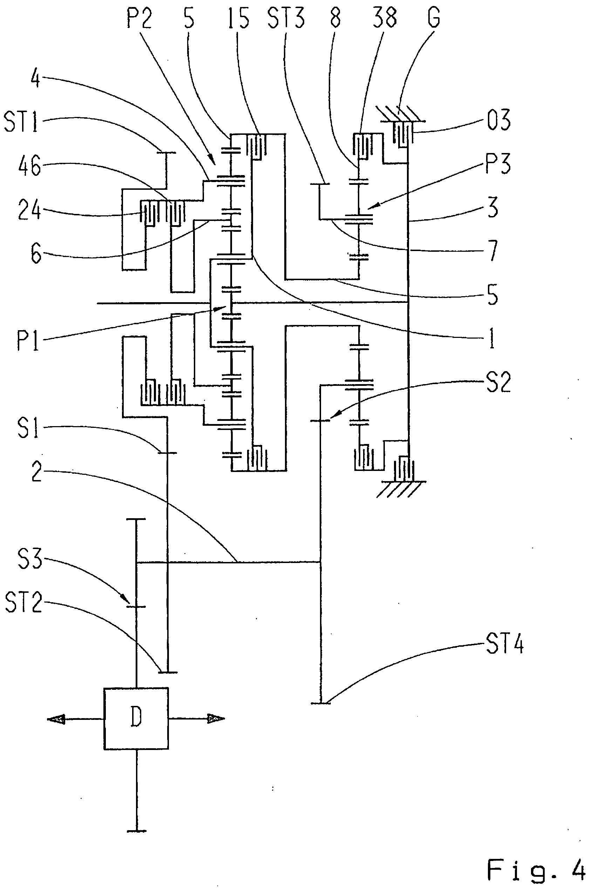

Das in Figur 4 gezeigte Getriebe unterscheidet sich von der Ausführungsform gemäß Figur 1 dadurch, dass die vierte Welle 4 des Getriebes über die zweite Kupplung 24 mit dem ersten Stirnrad ST1 der ersten Stirnradstufe S1 lösbar verbindbar ist, wobei das zweite Stirnrad ST2 der ersten Stirnradstufe S1 mit der Abtriebswelle 2 verbunden ist. Hierbei können die zweite und vierte Kupplung 24, 46 axial betrachtet nebeneinander angeordnet sein und einen gemeinsamen Außenlamellenträger aufweisen.

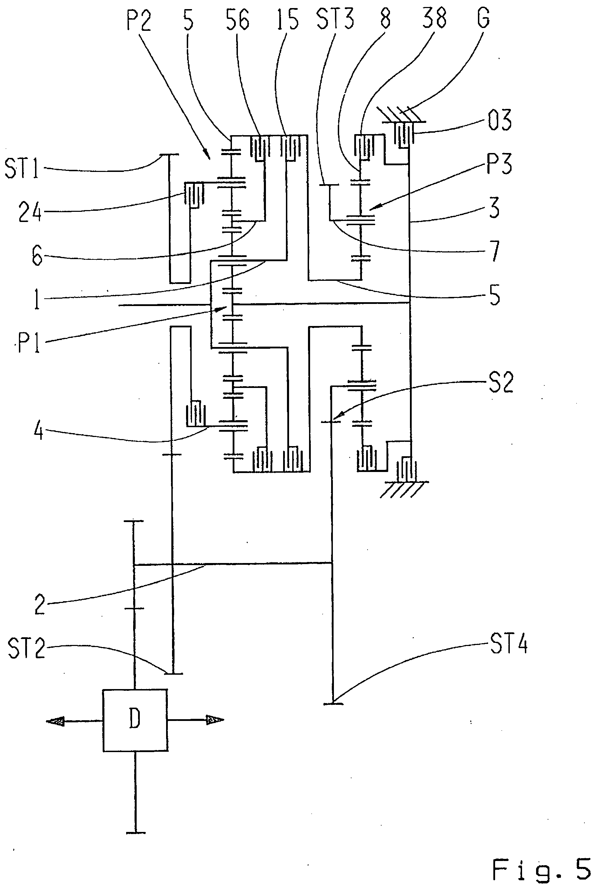

Gegenstand der Figur 5 ist eine Ausführungsform, die sich von der Ausführungsform gemäß Figur 2 darin unterscheidet, dass analog zum Beispiel gemäß Figur 4, die vierte Welle 4 über die zweite Kupplung 24 mit dem ersten Stirnrad ST1 der ersten Stirnradstufe S1 lösbar verbindbar ist, wobei das zweite Stirnrad ST2 der ersten Stirnradstufe S1 mit der Abtriebswelle 2 verbunden ist.

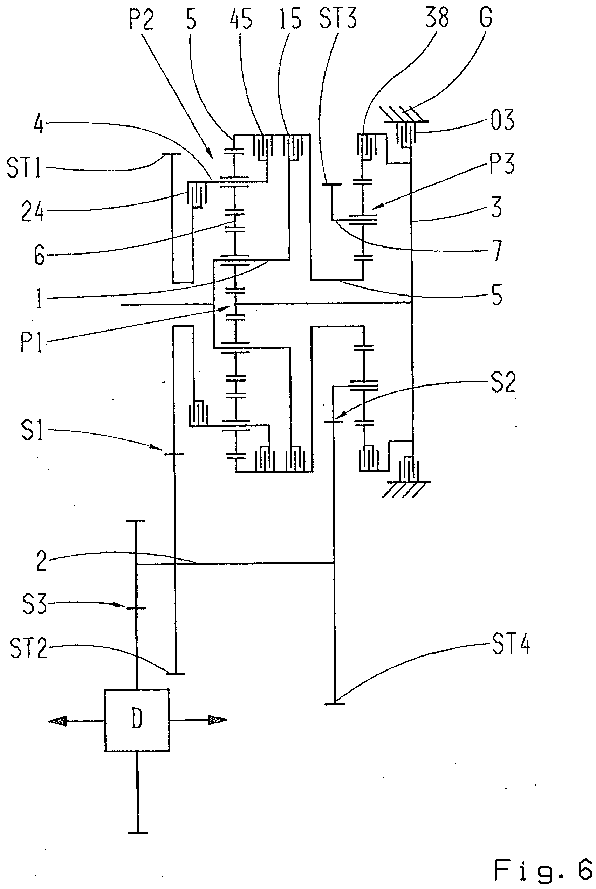

Ferner ist in Figur 6 eine Ausführungsform dargestellt, die der Ausführungsform nach Figur 3 entspricht, mit dem Unterschied, dass die vierte Welle 4 des Getriebes über die zweite Kupplung 24 mit dem ersten Stirnrad ST1 der ersten Stirnradstufe S1 lösbar verbindbar ist, wobei das zweite Stirnrad ST2 der ersten Stirnradstufe S1 mit der Abtriebswelle 2 verbunden ist.

Bei den Ausführungsbeispielen gemäß Figuren 1 bis 6 ist dem Getriebe eine weitere Stirnradstufe S3 nachgeschaltet, welche mit einem Differentialgetriebe D des Fahrzeugs verbunden ist.

Im Rahmen einer vorteilhaften Weiterbildung der Erfindung können lediglich die zweite Kupplung 24 und die dritte Kupplung 38 als dauerschlupffähige Reibschaltelemente ausgeführt sein, wodurch Drehungleichförmigkeitsgegenmaßnahmen entfallen.

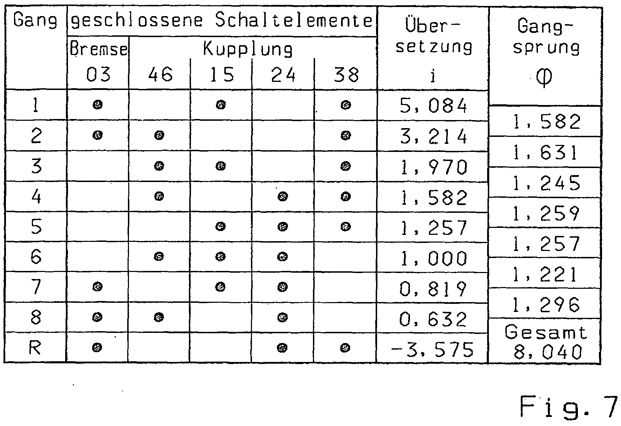

In Figur 7 ist ein beispielhaftes Schaltschema eines Mehrstufengetriebes gemäß Figuren 1 bis 6 dargestellt. Für jeden Gang werden drei Schaltelemente geschlossen. Dem Schaltschema können die jeweiligen Übersetzungen i der einzelnen Gangstufen und die daraus zu bestimmenden Gangsprünge bzw. Stufensprünge φ zum nächst höheren Gang beispielhaft entnommen werden, wobei der Wert 8,040 die Spreizung des Getriebes darstellt.

Die Werte für die Standgetriebeübersetzungen der als Minus-Planetenradsätze ausgeführten Planetenradsätze P1, P2, P3 sind bei dem gezeigten Beispiel jeweils -1,720, -1,630 und -1,580, wobei die Übersetzungen der ersten und zweiten Stirnradstufe S1, S2 jeweils 1,000 und 1,970 betragen. Aus Figur 7 wird ersichtlich, dass bei sequentieller Schaltweise jeweils nur ein Schaltelement zugeschaltet und ein Schaltelement abgeschaltet werden muss, da zwei benachbarte Gangstufen zwei Schaltelemente gemeinsam benutzen. Ferner wird ersichtlich, dass eine große Spreizung bei kleinen Gangsprüngen erzielt wird.

Für den Fall, dass sie eine vierte Kupplung 46 vorgesehen ist, welche die vierte Welle 4 mit der sechsten Welle 6 lösbar verbindet, was bei den Ausführungsformen gemäß Figuren 1 und 4 der Fall ist, ergibt sich der erste Vorwärts-Gang durch Schließen der Bremse 03 und der ersten und dritten Kupplung 15, 38, der zweite Vorwärts-Gang durch Schließen der Bremse 03 und der dritten und vierten Kupplung 38, 46, der dritte Vorwärts-Gang durch Schließen der ersten, dritten und vierten Kupplung 15, 38, 46, der vierte Vorwärts-Gang durch Schließen der zweiten, dritten und vierten Kupplung 24, 38, 46, der fünfte Vorwärts-Gang durch Schließen der ersten, zweiten und dritten Kupplung 15, 24, 38, der als Direktgang ausgeführte sechste Vorwärts-Gang durch Schließen der ersten, zweiten und vierten Kupplung 15, 24, 46, der siebte Vorwärts-Gang durch Schließen der Bremse 03 und der ersten und zweiten Kupplung 15, 24 und der achte Vorwärts-Gang ergibt sich durch Schließen der Bremse 03 und der zweiten und vierten Kupplung 24, 46, wobei sich der Rückwärtsgang durch Schließen der Bremse 03 und der zweiten und dritten Kupplung 24, 38 ergibt.

Für die in Figuren 2 und 5 gezeigte Ausführungsformen unterscheidet sich das Schaltschema vom Schaltschema gemäß Figur 7 lediglich dadurch, dass die vierte Kupplung 46 durch die fünfte Kupplung 56 ersetzt wird, wobei für den Fall eines Getriebes gemäß Figuren 3 und 6 die vierte Kupplung 46 durch die sechste Kupplung 45 ersetzt wird.

Dadurch, dass im ersten Vorwärts-Gang und im Rückwärtsgang die Bremse 03 und die dritte Kupplung 38 geschlossen sind, können diese Schaltelemente als Anfahrelemente eingesetzt werden.

Gemäß der Erfindung ergeben sich auch bei gleichem Getriebeschema je nach Schaltlogik unterschiedliche Gangsprünge, so dass eine anwendungs- bzw. fahrzeugspezifische Variation ermöglicht wird.

Prinzipiell kann auf jeder Welle des erfindungsgemäßen Getriebes eine elektrische Maschine oder eine weitere Antriebsquelle angeordnet werden. Im Rahmen einer besonders vorteilhaften Weiterbildung der Erfindung kann eine elektrische Maschine vorgesehen sein, welche auf der Antriebswelle 1 angeordnet ist und mit der Antriebswelle 1 direkt verbunden ist. Hierbei kann eine siebte Kupplung vorgesehen sein, durch die der Verbrennungsmotor vom Getriebe abgekoppelt werden kann, wodurch sämtliche Gänge des Getriebes in vorteilhafter Weise rein elektrisch gefahren werden können.

Alternativ zur direkten Verbindung der elektrischen Maschine mit der Antriebswelle kann die elektrische Maschine achsparallel zur Antriebswelle 1 angeordnet sein und über eine Radstufe oder einen Kettentrieb mit der Antriebswelle 1 verbunden sein, wobei optional eine siebte Kupplung vorgesehen sein kann, durch die Verbrennungsmotor vom Getriebe abgekoppelt werden kann.

Erfindungsgemäß ist es möglich, an jeder geeigneten Stelle des Mehrstufengetriebes zusätzliche Freiläufe vorzusehen, beispielsweise zwischen einer Welle und dem Gehäuse oder um zwei Wellen gegebenenfalls zu verbinden.

Auf der Antriebsseite oder auf der Abtriebsseite können erfindungsgemäß ein Achsdifferential und/ oder ein Verteilerdifferential angeordnet werden.

Im Rahmen vorteilhafter Weiterbildungen kann die Antriebswelle 1 durch ein Kupplungselement von einem Antriebsmotor nach Bedarf getrennt werden, wobei als Kupplungselement ein hydrodynamischer Wandler, eine hydraulische Kupplung, eine trockene Anfahrkupplung, eine nasse Anfahrkupplung, eine Magnetpulverkupplung oder eine Fliehkraftkupplung einsetzbar sind. Es ist auch möglich, ein derartiges Anfahrelement in Kraftflussrichtung hinter dem Getriebe anzuordnen, wobei in diesem Fall die Antriebswelle 1 ständig mit der Kurbelwelle des Antriebsmotors verbunden ist.

Das erfindungsgemäße Mehrstufengetriebe ermöglicht außerdem die Anordnung eines Torsionsschwingungsdämpfers zwischen Antriebsmotor und Getriebe.

Im Rahmen einer weiteren, nicht dargestellten Ausführungsform der Erfindung kann auf jeder Welle, bevorzugt auf der Antriebswelle 1 oder der Abtriebswelle 2, eine verschleißfreie Bremse, wie z. B. ein hydraulischer oder elektrischer Retarder oder dergleichen, angeordnet sein, was insbesondere für den Einsatz in Nutzkraftfahrzeugen von besonderer Bedeutung ist. Des Weiteren kann zum Antrieb von zusätzlichen Aggregaten auf jeder Welle, bevorzugt auf der Antriebswelle 1 oder der Abtriebswelle 2, ein Nebenabtrieb vorgesehen sein.

Die eingesetzten Reibschaltelemente können als lastschaltbare Kupplungen oder Bremsen ausgebildet sein. Insbesondere können kraftschlüssige Kupplungen oder Bremsen, wie z. B. Lamellenkupplungen, Bandbremsen und/ oder Konuskupplungen, verwendet werden. Ferner können die eingesetzten Schaltelemente als formschlüssige Schaltelemente ausgeführt sein.

### Bezugszeichen

- 1: erste Welle, Antriebswelle
- 2: zweite Welle, Abtriebswelle
- 3: dritte Welle
- 4: vierte Welle
- 5: fünfte Welle
- 6: sechste Welle
- 7: siebte Welle
- 8: achte Welle
- 03: Bremse
- 15: erste Kupplung
- 24: zweite Kupplung
- 38: dritte Kupplung
- 45: sechste Kupplung
- 46: vierte Kupplung
- 56: fünfte Kupplung
- D: Differentialgetriebe
- G: Gehäuse
- P1: erster Planetenradsatz
- P2: zweiter Planetenradsatz
- P3: dritter Planetenradsatz
- S1: erste Stirnradstufe
- S2: zweite Stirnradstufe
- S3: dritte Stirnradstufe
- ST1: erstes Stirnrad der ersten Stirnradstufe S1
- ST2: zweites Stirnrad der ersten Stirnradstufe S1
- ST3: erstes Stirnrad der zweiten Stirnradstufe S2
- ST4: zweites Stirnrad der zweiten Stirnradstufe S2
- i: Übersetzung
- φ: Stufensprung

## Patentansprüche

1. Mehrstufengetriebe, insbesondere Automatgetriebe für ein Kraftfahrzeug, umfassend eine Antriebswelle (1), eine Abtriebswelle (2), drei Planetenradsätze (P1, P2, P3), eine erste und eine zweite Stirnradstufe (S1, S2) in Verbindung mit einer parallel zur Längsachse der Planetenradsätze (P1, P2, P3) angeordneten Vorgelegewelle, die als die Abtriebswelle (2) des Getriebes dient, welche in einem Gehäuse (G) angeordnet sind, mindestens acht drehbare Wellen (1, 2, 3, 4, 5, 6, 7, 8) einschließlich der Antriebswelle (1) und der Abtriebswelle (2) sowie mindestens fünf Schaltelemente (03, 15, 24, 38, 45, 46, 56), umfassend eine Bremse (03) und Kupplungen (15, 24, 38, 45, 46, 56), deren selektives Eingreifen verschiedene Übersetzungsverhältnisse zwischen der Antriebswelle (1) und der Abtriebswelle (2) bewirkt, so dass acht Vorwärtsgänge und ein Rückwärtsgang realisierbar sind, **dadurch gekennzeichnet, dass** die Antriebswelle (1) mit einem Steg des ersten Planetenradsatzes (P1) verbunden und über eine erste Kupplung (15) mit einer fünften Welle (5) lösbar verbindbar ist, die mit einem Hohlrad des zweiten Planetenradsatzes (P2) und einem Sonnehrad des dritten Planetenradsatzes (P3) verbunden ist, wobei ein Hohlrad des ersten Planetenradsatzes (P1) mit einer mit einem Sonnenrad des zweiten Planetenradsatzes (P2) verbundenen sechsten Welle (6) verbunden ist, wobei eine dritte Welle (3) mit einem Sonnenrad des ersten Planetenradsatzes (P1) verbunden, über die Bremse (03) an das Gehäuse (G) des Getriebes ankoppelbar und über eine dritte Kupplung (38) mit einer mit einem Hohlrad des dritten Planetenradsatzes (P3) verbundenen achten Welle (8) lösbar verbindbar ist, wobei ein Steg des zweiten Planetenradsatzes (P2) mit einer vierten Welle (4) verbunden ist, welche über die erste Stirnradstufe (S1) und eine zweite Kupplung (24) mit der Abtriebswelle (2) lösbar verbindbar ist, wobei ein Steg des dritten Planetenradsatzes (P3) mit einer siebten Welle (7) verbunden ist, die mit einem ersten Stirnrad (ST3) der zweiten Stimradstufe (S2) verbunden ist, wobei ein zweites Stirnrad (ST4) der zweiten Stirnradstufe (S2) mit der Abtriebswelle (2) verbunden ist, wobei eine vierte Kupplung (46), eine fünfte Kupplung (56) oder eine sechste Kupplung (45) vorgesehen ist, durch deren Schließen der zweite Planetenradsatz (P2) verblockbar ist.

2. Mehrstufengetriebe nach Anspruch 1, **dadurch gekennzeichnet, dass** die vierte Kupplung (46) als Kupplung ausgeführt ist, welche die sechste Welle (6) mit der vierten Welle (4) lösbar verbindet, so dass bei geschlossener vierter Kupplung (46) eine Verblockung des zweiten Planetenradsatzes (P2) durch die Koppelung des Steges des zweiten Planetenradsatzes (P2) mit dem Sonnenrad des zweiten Planetenradsatzes (P2) erfolgt.

3. Mehrstufengetriebe nach Anspruch 1, **dadurch gekennzeichnet, dass** die fünfte Kupplung (56) als Kupplung ausgeführt ist, welche die fünfte Welle (5) mit der sechsten Welle (6) lösbar verbindet, so dass bei geschlossener fünfter Kupplung (56) eine Verblockung des zweiten Planetenradsatzes (P2) durch die Koppelung des Sonnenrades des zweiten Planetenradsatzes (P2) mit dem Hohlrad des zweiten Planetenradsatzes (P2) erfolgt.

4. Mehrstufengetriebe nach Anspruch 1, **dadurch gekennzeichnet, dass** die sechste Kupplung (45) als Kupplung ausgeführt ist, welche die fünfte Welle (5) mit der vierten Welle (4) lösbar verbindet, so dass bei geschlossener sechster Kupplung (45) eine Verblockung des zweiten Planetenradsatzes (P2) durch die Koppelung des Steges des zweiten Planetenradsatzes (P2) mit dem Hohlrad des zweiten Planetenradsatzes (P2) erfolgt.

5. Mehrstufengetriebe nach Anspruch 1, 2, 3 oder 4, **dadurch gekennzeichnet, dass** die vierte Welle (4) mit einem ersten Stirnrad (ST1) der ersten Stirnradstufe (S1) verbunden ist, deren zweites Stirnrad (ST2) über die zweite Kupplung (24) mit der Abtriebswelle (2) lösbar verbindbar ist.

6. Mehrstufengetriebe nach Anspruch 1, 2, 3, oder 4, **dadurch gekennzeichnet, dass** die vierte Welle (4) über die zweite Kupplung (24) mit dem ersten Stirnrad (ST1) der ersten Stirnradstufe (S1) lösbar verbindbar ist, wobei das zweite Stirnrad (ST2) der ersten Stirnradstufe (S1) mit der Abtriebswelle (2) verbunden ist.

7. Mehrstufengetriebe nach einem der vorangehenden Ansprüche, **dadurch gekennzeichnet, dass** die Planetenradsätze (P1, P2, P3) als Minus-Planetenradsätze ausgebildet sind.

8. Mehrstufengetriebe nach einem der vorangehenden Ansprüche, **dadurch gekennzeichnet, dass** der zweite Planetenradsatz (P2) radial betrachtet über dem ersten Planetensatz (P1) angeordnet ist.

9. Mehrstufengetriebe nach Anspruch 8, **dadurch gekennzeichnet, dass** die Planetenradsätze (P1, P2, P3) axial betrachtet in der Reihenfolge erster Planetenradsatz (P1)/zweiter Planetenradsatz (P2), dritter Planetenradsatz (P3) angeordnet sind.

10. Mehrstufengetriebe nach einem der vorangehenden Ansprüche, **dadurch gekennzeichnet, dass** eine elektrische Maschine vorgesehen ist, welche auf der Antriebswelle des Getriebes angeordnet ist und mit der Antriebswelle direkt verbunden ist oder welche achsparallel zur Antriebswelle angeordnet ist und mit der Antriebswelle über eine Radstufe oder einen Kettentrieb verbunden ist.

11. Mehrstufengetriebe nach Anspruch 10, **dadurch gekennzeichnet, dass** eine siebte Kupplung vorgesehen ist, durch die ein Verbrennungsmotor vom Getriebe abgekoppelt werden kann, wodurch sämtliche Gänge des Getriebes rein elektrisch gefahren werden können.

12. Mehrstufengetriebe nach einem der vorangehenden Ansprüche, **dadurch gekennzeichnet, dass** für den Fall, dass eine vierte Kupplung (46) vorgesehen ist, welche die vierte Welle (4) mit der sechsten Welle (6) lösbar verbindet, sich der erste Vorwärts-Gang durch Schließen der Bremse (03) und der ersten und dritten Kupplung (15, 38), der zweite Vorwärts-Gang durch Schließen der Bremse (03) und der dritten und vierten Kupplung (38, 46), der dritte Vorwärts-Gang durch Schließen der ersten, dritten und vierten Kupplung (15, 38, 46), der vierte Vorwärts-Gang durch Schließen der zweiten, dritten und vierten Kupplung (24, 38, 46), der fünfte Vorwärts-Gang durch Schließen der ersten, zweiten und dritten Kupplung (15, 24, 38), der sechste Vorwärts-Gang durch Schließen der ersten, zweiten und vierten Kupplung (15, 24, 46), der siebte Vorwärts-Gang durch Schließen der Bremse (03) und der ersten und zweiten Kupplung (15, 24) und dass sich der achte Vorwärts-Gang durch Schließen der Bremse (03) und der zweiten und vierten Kupplung (24, 46) ergibt, wobei sich der Rückwärtsgang durch Schließen der Bremse (03) und der zweiten und dritten Kupplung (24, 38) ergibt, wobei für den Fall, dass eine fünfte Kupplung (56) vorgesehen ist, welche die sechste Welle (6) mit der fünften Welle (5) lösbar verbindet, die vierte Kupplung (46) durch die fünfte Kupplung (56) ersetzt wird und wobei für den Fall, dass eine sechste Kupplung (45) vorgesehen ist, welche die fünfte Welle (5) mit der vierten Welle (4) lösbar verbindet, die vierte Kupplung (46) durch die sechste Kupplung (45) ersetzt wird.

13. Mehrstufengetriebe nach einem der vorhergehenden Ansprüche, **dadurch gekennzeichnet, dass** zusätzlich zu der ersten und/ oder zweiten Stirnradstufe ein oder mehrere mechanische Bauteile, wie Riemen und/ oder Ketten zur Drehmomentübertragung angeordnet sind.

14. Mehrstufengetriebe nach einem der vorhergehenden Ansprüche, **dadurch gekennzeichnet, dass** die Abtriebswelle (2) über zumindest ein Planetengetriebe mit einer Eingangswelle eines Differentialgetriebes verbunden ist.

## Claims

1. Multiple gear transmission, in particular automatic transmission for a motor vehicle, comprising a drive shaft (1), an output shaft (2), three planetary gear sets (PI, P2, P3), a first and a second spur gear stage (S1, S2) in conjunction with a countershaft which is arranged parallel to the longitudinal axis of the planetary gear sets (PI, P2, P3) and serves as the output shaft (2) of the transmission, which are arranged in a housing (G), at least eight rotatable shafts (1, 2, 3, 4, 5, 6, 7, 8) including the drive shaft (1) and the output shaft (2), and at least five shifting elements (03, 15, 24, 38, 45, 46, 56), comprising a brake (03) and clutches (15, 24, 38, 45, 46, 56), the selective engagement of which brings about various transmission ratios between the drive shaft (1) and the output shaft (8), with the result that eight forward gears and one reverse gear can be realized, **characterized in that** the drive shaft (1) is connected to a spider of the first planetary gear set (P1) and can be connected releasably via a first clutch (15) to a fifth shaft (5) which is connected to an internal gear of the second planetary gear set (P2) and a sun gear of the third planetary gear set (P3), an internal gear of the first planetary gear set (P1) being connected to a sixth shaft (6) which is connected to a sun gear of the second planetary gear set (P2), a third shaft (3) being connected to a sun gear of the first planetary gear set (P1), being capable of being coupled to the housing (G) of the transmission via the brake (03) and being capable of being connected releasably via a third clutch (38) to an eighth shaft (8) which is connected to an internal gear of the third planetary gear set (P3), a spider of the second planetary gear set (P2) being connected to a fourth shaft (4) which can be connected releasably via the first spur gear stage (S1) and a second clutch (24) to the output shaft (2), a spider of the third planetary gear set (P3) being connected to a seventh shaft (7) which is connected to a first spur gear (ST3) of the second spur gear stage (S2), a second spur gear (ST4) of the second spur gear stage (S2) being connected to the output shaft (2), a fourth clutch (46), a fifth clutch (56) or a sixth clutch (45) being provided, by way of the closure of which the second planetary gear set (P2) can be blocked.

2. Multiple gear transmission according to Claim 1, **characterized in that** the fourth clutch (46) is configured as a clutch which connects the sixth shaft (6) to the fourth shaft (4) releasably, with the result that, if the fourth clutch (46) is closed, blocking of the second planetary gear set (P2) takes place by way of the coupling of the spider of the second planetary gear set (P2) to the sun gear of the second planetary gear set (P2).

3. Multiple gear transmission according to Claim 1, **characterized in that** the fifth clutch (56) is configured as a clutch which connects the fifth shaft (5) to the sixth shaft (6) releasably, with the result that, if the fifth clutch (56) is closed, blocking of the second planetary gear set (P2) takes place by way of the coupling of the sun gear of the second planetary gear set (P2) to the internal gear of the second planetary gear set (P2).

4. Multiple gear transmission according to Claim 1, **characterized in that** the sixth clutch (45) is configured as a clutch which connects the fifth shaft (5) to the fourth shaft (4) releasably, with the result that, if the sixth clutch (45) is closed, blocking of the second planetary gear set (P2) takes place by way of the coupling of the spider of the second planetary gear set (P2) to the internal gear of the second planetary gear set (P2).

5. Multiple gear transmission according to Claim 1, 2, 3 or 4, **characterized in that** the fourth shaft (4) is connected to a first spur gear (ST1) of the first spur gear stage (S1), the second spur gear (ST2) of which can be connected releasably to the output shaft (2) via the second clutch (24).

6. Multiple gear transmission according to Claim 1, 2, 3 or 4, **characterized in that** the fourth shaft (4) can be connected releasably to the first spur gear (ST1) of the first spur gear stage (S1) via the second clutch (24), the second spur gear (ST2) of the first spur gear stage (S1) being connected to the output shaft (2).

7. Multiple gear transmission according to one of the preceding claims, **characterized in that** the planetary gear sets (P1, P2, P3) are configured as negative planetary gear sets.

8. Multiple gear transmission according to one of the preceding claims, **characterized in that** the second planetary gear set (P2) is arranged above the first planetary set (P1) as viewed radially.

9. Multiple gear transmission according to Claim 8, **characterized in that** the planetary gear sets (P1, P2, P3) are arranged in the sequence first planetary gear set (P1)/second planetary gear set (P2), third planetary gear set (P3) as viewed axially.

10. Multiple gear transmission according to one of the preceding claims, **characterized in that** an electric machine is provided which is arranged on the drive shaft of the transmission and is connected directly to the drive shaft or which is arranged axially parallel to the drive shaft and is connected to the drive shaft via a gear stage or a chain drive.

11. Multiple gear transmission according to Claim 10, **characterized in that** a seventh clutch is provided, by way of which an internal combustion engine can be decoupled from the transmission, as a result of which all gears of the transmission can be driven purely electrically.

12. Multiple gear transmission according to one of the preceding claims, **characterized in that**, for the case where a fourth clutch (46) is provided which connects the fourth shaft (4) to the sixth shaft (6) releasably, the first forward gear results from closure of the brake (03) and the first and third clutch (15, 38), the second forward gear results from closure of the brake (03) and the third and fourth clutch (38, 46), the third forward gear results from closure of the first, third and fourth clutch (15, 38, 46), the fourth forward gear results from closure of the second, third and fourth clutch (24, 38, 46), the fifth forward gear results from closure of the first, second and third clutch (15, 24, 38), the sixth forward gear results from closure of the first, second and fourth clutch (15, 24, 46), the seventh forward gear results from closure of the brake (03) and the first and second clutch (15, 24), and that the eighth forward gear results from closure of the brake (03) and the second and fourth clutch (24, 46), the reverse gear resulting from closure of the brake (03) and the second and third clutch (24, 38), the fourth clutch (46) being replaced by the fifth clutch (56) for the case where a fifth clutch (56) is provided which connects the sixth shaft (6) to the fifth shaft (5) releasably, and the fourth clutch (46) being replaced by the sixth clutch (45) for the case where a sixth clutch (45) is provided which connects the fifth shaft (5) to the fourth shaft (4) releasably.

13. Multiple gear transmission according to one of the preceding claims, **characterized in that**, in addition to the first and/or second spur gear stage, one or more mechanical components such as belts and/or chains are arranged for the transmission of torque.

14. Multiple gear transmission according to one of the preceding claims, **characterized in that** the output shaft (2) is connected via at least one planetary gear mechanism to an input shaft of a differential gear mechanism.

## Revendications

1. Boîte de vitesses multi-étagée, en particulier boîte de vitesses automatique pour un véhicule automobile, comprenant un arbre d'entraînement (1), un arbre de sortie (2), trois trains planétaires (P1, P2, P3), un premier et un deuxième étage de pignons droits (S1, S2) en liaison avec un arbre secondaire disposé parallèlement à l'axe longitudinal des trains planétaires (P1, P2, P3), lequel sert d'arbre de sortie (2) de la boîte de vitesses, lesquels sont disposés dans un boîtier (G), au moins huit arbres rotatifs (1, 2, 3, 4, 5, 6, 7, 8) incluant l'arbre d'entraînement (1) et l'arbre de sortie (2) ainsi qu'au moins cinq éléments de changement de vitesses (03, 15, 24, 38, 45, 46, 56), comprenant un frein (03) et des embrayages (15, 24, 38, 45, 46, 56) dont l'engagement sélectif provoque différents rapports de démultiplication entre l'arbre d'entraînement (1) et l'arbre de sortie (2) de telle sorte que huit vitesses de marche avant et une vitesse de marche arrière puissent être réalisées, **caractérisée en ce que** l'arbre d'entraînement (1) est connecté à un porte-satellites du premier train planétaire (P1) et peut être connecté de manière amovible par le biais d'un premier embrayage (15) à un cinquième arbre (5) qui est connecté à une couronne dentée du deuxième train planétaire (P2) et à une roue solaire du troisième train planétaire (P3), une couronne dentée du premier train planétaire (P1) étant connectée à un sixième arbre (6) connecté à une roue solaire du deuxième train planétaire (P2), un troisième arbre (3) étant connecté à une roue solaire du premier train planétaire (P1), pouvant être accouplé par le biais du frein (03) au boîtier (G) de la boîte de vitesses et pouvant être connecté de manière amovible par le biais d'un troisième embrayage (38) à un huitième arbre (8) connecté à une couronne dentée du troisième train planétaire (P3), un porte-satellites du deuxième train planétaire (P2) étant connecté à un quatrième arbre (4) qui peut être connecté de manière amovible par le biais du premier étage de pignons droits (S1) et d'un deuxième embrayage (24) à l'arbre de sortie (2), un porte-satellites du troisième train planétaire (P3) étant connecté à un septième arbre (7) qui est connecté à un premier pignon droit (ST3) du deuxième étage de pignons droits (S2), un deuxième pignon droit (ST4) du deuxième étage de pignons droits (S2) étant connecté à l'arbre de sortie (2), un quatrième embrayage (46), un cinquième embrayage (56) ou un sixième embrayage (45) étant prévu, dont la fermeture permet de bloquer le deuxième train planétaire (P2).

2. Boîte de vitesses multi-étagée selon la revendication 1, **caractérisée en ce que** le quatrième embrayage (46) est réalisé sous forme d'embrayage qui relie de manière amovible le sixième arbre (6) au quatrième arbre (4) de telle sorte que lorsque le quatrième embrayage (46) est fermé, un blocage du deuxième train planétaire (P2) se produise par l'accouplement du porte-satellites du deuxième train planétaire (P2) avec la roue solaire du deuxième train planétaire (P2).

3. Boîte de vitesses multi-étagée selon la revendication 1, **caractérisée en ce que** le cinquième embrayage (56) est réalisé sous forme d'embrayage qui relie de manière amovible le cinquième arbre (5) au sixième arbre (6), de telle sorte que lorsque le cinquième embrayage (56) est fermé, un blocage du deuxième train planétaire (P2) se produise par l'accouplement de la roue solaire du deuxième train planétaire (P2) avec la couronne dentée du deuxième train planétaire (P2).

4. Boîte de vitesses multi-étagée selon la revendication 1, **caractérisée en ce que** le sixième embrayage (45) est réalisé sous forme d'embrayage qui relie de manière amovible le cinquième arbre (5) au quatrième arbre (4), de telle sorte que lorsque le sixième embrayage (45) est fermé, un blocage du deuxième train planétaire (P2) se produise par l'accouplement du porte-satellites du deuxième train planétaire (P2) avec la couronne dentée du deuxième train planétaire (P2).

5. Boîte de vitesses multi-étagée selon la revendication 1, 2, 3 ou 4, **caractérisée en ce que** le quatrième arbre (4) est connecté à un premier pignon droit (ST1) du premier étage de pignons droits (S1), dont le deuxième pignon droit (ST2) peut être connecté de manière amovible par le biais du deuxième embrayage (24) à l'arbre de sortie (2).

6. Boîte de vitesses multi-étagée selon la revendication 1, 2, 3 ou 4, **caractérisée en ce que** le quatrième arbre (4) peut être connecté de manière amovible par le biais du deuxième embrayage (24) au premier pignon droit (ST1) du premier étage de pignons droits (S1), le deuxième pignon droit (ST2) du premier étage de pignons droits (S1) étant connecté à l'arbre de sortie (2).

7. Boîte de vitesses multi-étagée selon l'une quelconque des revendications précédentes, **caractérisée en ce que** les trains planétaires (P1, P2, P3) sont réalisés sous forme de trains planétaires négatifs.

8. Boîte de vitesses multi-étagée selon l'une quelconque des revendications précédentes, **caractérisée en ce que** le deuxième train planétaire (P2) est disposé, considéré radialement, au-dessus du premier train planétaire (P1).

9. Boîte de vitesses multi-étagée selon la revendication 8, **caractérisée en ce que** les trains planétaires (P1, P2, P3), considérés axialement, sont disposés dans l'ordre suivant : premier train planétaire (P1)/deuxième train planétaire (P2), troisième train planétaire (P3).

10. Boîte de vitesses multi-étagée selon l'une quelconque des revendications précédentes, **caractérisée en ce qu'**une machine électrique est prévue, laquelle est disposée sur l'arbre d'entraînement de la boîte de vitesses, et est connectée directement à l'arbre d'entraînement ou laquelle est disposée avec son axe parallèle à l'arbre d'entraînement et est connectée à l'arbre d'entraînement par le biais d'un étage de roue ou d'un entraînement à chaîne.

11. Boîte de vitesses multi-étagée selon la revendication 10, **caractérisée en ce qu'**il est prévu un septième embrayage par le biais duquel un moteur à combustion peut être désaccouplé de la boîte de transmission, de sorte que toutes les vitesses de la boîte de transmission puissent être entraînées purement électriquement.

12. Boîte de vitesses multi-étagée selon l'une quelconque des revendications précédentes, **caractérisée en ce que** dans le cas où il est prévu un quatrième embrayage (46) qui relie de manière amovible le quatrième arbre (4) au sixième arbre (6), la première vitesse de marche avant s'obtient par fermeture du frein (03) et du premier et du troisième embrayage (15, 38), la deuxième vitesse de marche avant s'obtient par fermeture du frein (03) et du troisième et du quatrième embrayage (38, 46), la troisième vitesse de marche avant s'obtient par fermeture du premier, du troisième et du quatrième embrayage (15, 38, 46), la quatrième vitesse de marche avant s'obtient par fermeture du deuxième, du troisième et du quatrième embrayage (24, 38, 46), la cinquième vitesse de marche avant s'obtient par fermeture du premier, du deuxième et du troisième embrayage (15, 24, 38), la sixième vitesse de marche avant s'obtient par fermeture du premier, du deuxième et du quatrième embrayage (15, 24, 46), la septième vitesse de marche avant s'obtient par fermeture du frein (03) et du premier et du deuxième embrayage (15, 24) et la huitième vitesse de marche avant s'obtient par fermeture du frein (03) et du deuxième et du quatrième embrayage (24, 46), la vitesse de marche arrière s'obtenant par fermeture du frein (03) et du deuxième et du troisième embrayage (24, 38), et dans le cas où un cinquième embrayage (56) est prévu, lequel relie de manière amovible le sixième arbre (6) au cinquième arbre (5), le quatrième embrayage (46) est remplacé par le cinquième embrayage (56) et dans le cas où un sixième embrayage (45) est prévu, lequel relie de manière amovible le cinquième arbre (5) au quatrième arbre (4), le quatrième embrayage (46) est remplacé par le sixième embrayage (45).

13. Boîte de vitesses multi-étagée selon l'une quelconque des revendications précédentes, **caractérisée en ce qu'**en plus du premier et/ou du deuxième étage de pignons droits, un ou plusieurs composants mécaniques, tels que des courroies et/ou des chaînes, sont prévus en vue du transfert de couple.

14. Boîte de vitesses multi-étagée selon l'une quelconque des revendications précédentes, **caractérisée en ce que** l'arbre de sortie (2) est connecté par le biais d'au moins un engrenage planétaire à un arbre d'entrée d'un engrenage différentiel.
